# FASCICULE DE BREVET EUROPEEN

(11) **EP 1 866 139 B1**
(45) Date de publication et mention de la délivrance du brevet: **18.03.2009**
(21) Numéro de dépôt: 06743616.2
(22) Date de dépôt: 29.03.2006
(51) Int. Cl.: B29C 49/48

(54) **DISPOSITIF DE MOULAGE A FOND REGLABLE EN HAUTEUR POUR LE MOULAGE DE RECIPIENTS THERMOPLASTIQUES DE HAUTEURS DIVERSES**
FORMVORRICHTUNG MIT HÖHENVERSTELLBAREM UNTERTEIL ZUM FORMEN VON THERMOPLASTISCHEN BEHÄLTERN VON VERSCHIEDENER HÖHE
MOLDING DEVICE WITH HEIGHT-ADJUSTABLE BASE FOR MOLDING THERMOPLASTIC CONTAINERS OF VARIOUS HEIGHTS

(30) Priorité: 01.04.2005 FR 0503240
(43) Date de publication de la demande: 19.12.2007
(73) Titulaire: Sidel Participations, 76930 Octeville Sur Mer (FR)
(72) Inventeur: DANNEBEY, Laurent, c/o Sidel Participations, F-76930 Octeville-sur-Mer (FR); CANCHEL, Eric, c/o Sidel Participations, F-76930 Octeville-sur-Mer (FR); MICHELET, Marc, c/o Sidel Participations, F-76930 Octeville-Sur-Mer (FR)
(74) Mandataire: Cabinet Plasseraud
(86) Numéro de dépôt international: PCT/FR2006/000680
(87) Numéro de publication internationale: WO 2006/103344

(56) Documents cités:
- GB-A- 1 425 638
- US-A- 765 365
- US-A- 4 815 960
- US-B1- 6 736 629

## Description

La présente invention concerne de façon générale le domaine des dispositifs de moulage pour la fabrication par soufflage ou étirage-soufflage de récipients, notamment de bouteilles, en matière thermoplastique telle que du PET, et elle concerne plus particulièrement des perfectionnements apportés à ceux de ces dispositifs de moulage prévus pour la fabrication de tels récipients, notamment de telles bouteilles, susceptibles de posséder des hauteurs différentes, lesdits dispositifs de moulage comprenant au moins un moule qui comporte deux demi-moules mobiles l'un par rapport à l'autre, notamment par rotation autour d'un axe commun fixe, et un fond de moule mobile par rapport aux deux demi-moules par translation axiale, chaque demi-moule et le fond de moule comportant des empreintes de moulage respectives qui, en position de fermeture du moule, définissent ensemble une cavité de moulage, le fond de moule étant supporté par un support de fond de moule auquel sont fonctionnellement associés des moyens de déplacement axial, le fond de moule et le support de fond de moule étant solidarisés l'un à l'autre par l'intermédiaire de moyens d'entretoisement de hauteur variable réglables en relation avec la hauteur de la cavité de moulage et constitués sous forme de moyens filetés.

Elle s'applique tout particulièrement, quoique non exclusivement aux dispositifs, tel celui décrit dans le document FR-2 733 176, dans lesquels chaque demi-moule est constitué d'un porte-moule, d'un porte-coquille fixé au porte-moule et d'une coquille supportée par le porte-coquille, les empreintes de chaque demi-moule étant réalisées dans lesdites coquilles. Elle s'applique bien entendu aux dispositifs antérieurs à celui décrit dans ce document FR-2 733 176, c'est-à-dire aux dispositifs dans lesquels les porte-moules ne supportent pas un porte coquille auquel est fixée une coquille, mais supportent chacun une pièce monobloc dans laquelle non seulement se trouve l'empreinte du demi-moule, mais encore sont ménagées des tubulures pour la régulation thermique du moule.

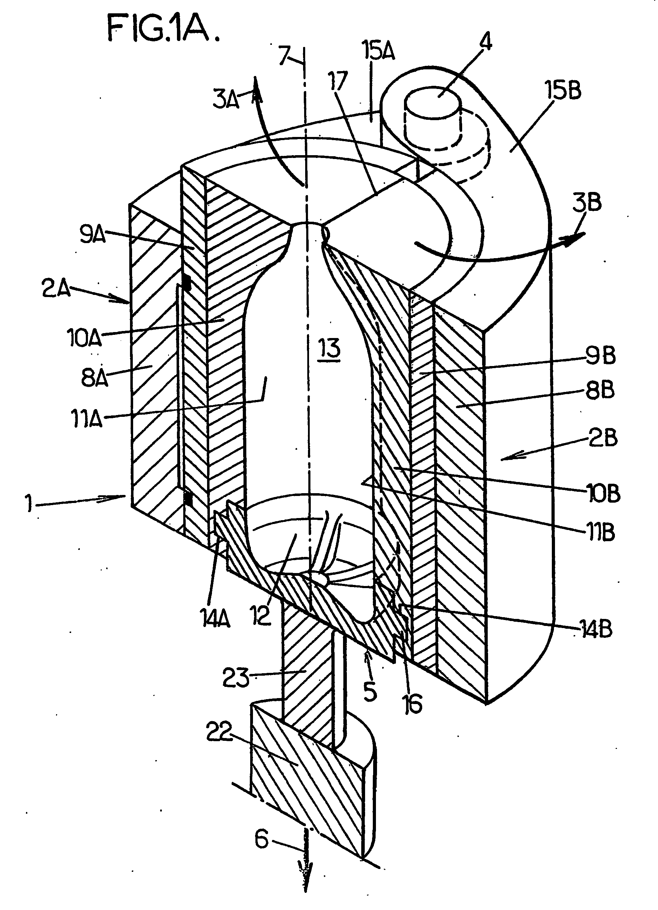

A la figure 1A est illustré de façon schématique, en demi-coupe axiale et en perspective latérale de dessus, un moule, désigné dans son ensemble par la référence 1, d'un dispositif de moulage, tel que décrit et représenté par exemple dans le document FR-2 733 176, auquel l'invention est applicable. Le moule 1, d'axe 7, comporte deux demi-moules respectivement 2A, 2B mobiles l'un par rapport à l'autre, notamment par rotation (flèches 3A, 3B respectivement) autour d'un axe 4 commun fixe, et un fond 5 de moule mobile par rapport aux deux demi-moules 2A, 2B par translation axiale coaxialement à l'axe 7 (flèche 6).

Chaque demi-moule 2A, 2B comprend un porte-moule respectivement 8A, 8B qui est équipé de bras respectifs 15A, 15B de support articulés sur l'axe 4 précité, un porte-coquille respectivement 9A, 9B fixé au porte-moule correspondant de toute manière connue de l'homme du métier et une coquille respectivement 10A, 10B supportée par le porte-coquille 9A, 9B respectif de toute manière connue de l'homme du métier. Les deux coquilles 10A, 10B et le fond 5 de moule comportent des empreintes 11A, 11B et 12 respectives de moulage qui, en position de fermeture du moule, définissent ensemble une cavité 13 de moulage qui est coaxiale à l'axe 7 du moule 1.

Le long des pourtours respectifs coopérants des demi-coquilles 10A, 10B et du fond 5, les demi-coquilles sont munies de gorges 14A, 14B respectives et le fond est muni d'une nervure 16 périphérique saillant radialement et propre à être reçue dans les gorges 14A, 14B en position de fermeture du moule 1 comme illustré à la figure 1A, afin que les demi-coquilles et le fond forment un ensemble mécanique indéformable en présence de la pression de soufflage (de l'ordre de 40x10⁵ Pa). Des agencements de ce type sont représentés par exemple dans les documents FR-2 720 680, FR-2 828 829 et FR-2 841 495.

On notera que, dans la représentation de la figure 1A, le plan de coupe du moule 1 fermé est sensiblement diamétral et sensiblement perpendiculaire au plan de joint 17 des coquilles 10A, 10B.

Dans la configuration illustrée à la figure 1A, les empreintes 11A, 11B des coquilles 10A, 10B occupent sensiblement toute la hauteur desdites coquilles 10A, 10B, lesquelles possèdent une hauteur sensiblement égale à celle des porte-coquilles 9A, 9B respectifs, qui est la hauteur du moule 1. Ainsi, la cavité 13 de moulage possède alors la hauteur maximale admissible dans ce moule et correspond à la hauteur maximale des récipients susceptibles d'être fabriqués avec ce moule (par exemple bouteilles de 2 litres comme illustré).

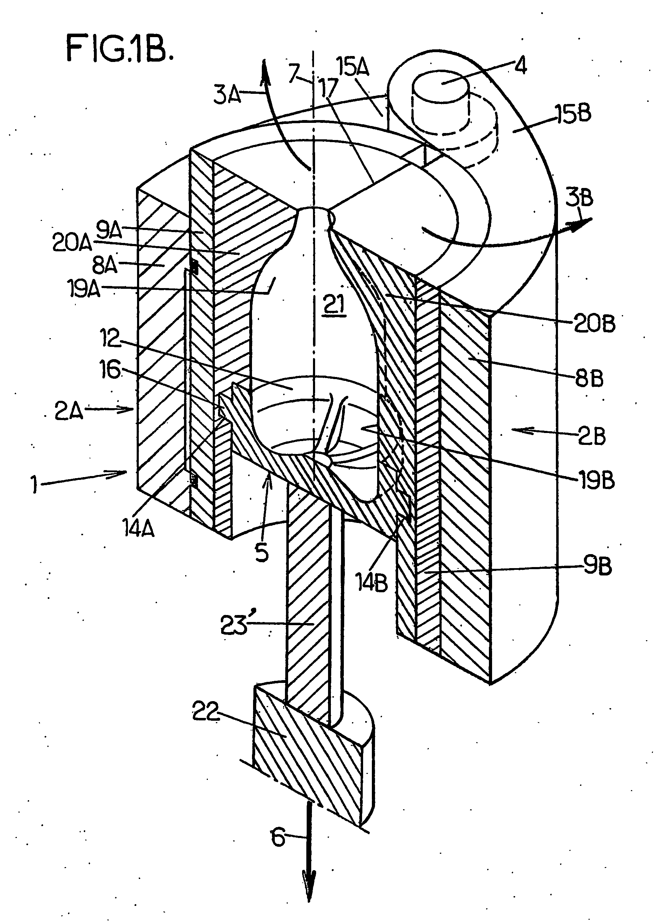

Pour accroître la capacité de production du moule, il est souhaitable qu'il puisse être configuré pour la fabrication non seulement desdits récipients de hauteur maximale, mais aussi pour la fabrication de récipients de hauteurs moindres (par exemple bouteilles de 1 litre, de 0,6 litre, ...) possédant toutefois un fond identique. A cette fin, il est connu de remplacer les coquilles 10A, 10B munies des empreintes 11A, 11B respectives de moulage par des coquilles 20A, 20B munies d'empreintes 19A, 19B respectives de moulage différentes (en l'occurrence moins hautes) comme montré à la figure 1B. Les empreintes 19A et 19B ainsi que l'empreinte 12 du fond définissent ensemble, en position de fermeture du moule, une cavité de moulage 21 moins haute que la cavité 13 de la figure 1A. En pratique, les empreintes 19A, 19B de moulage sont disposées dans la partie haute des demi-coquilles 20A, 20B, lesquelles sont disposées en haut des porte-coquilles. On conserve ainsi l'agencement général du dispositif de moulage, avec les porte-moules 8A, 8B et les porte-coquilles 9A, 9B, ainsi que le fond 5 à la condition que le positionnement axial de ce dernier par rapport aux coquilles soit modifié en relation avec la réduction de hauteur des empreintes de moulage.

Le fond 5 de moule est supporté par un support 22 de fond de moule auquel sont associés des moyens de déplacement (non montrés sur les figures 1A et 1B) propres à assurer le déplacement axial du fond 5 de moule au cours du processus de moulage. Le fond 5 de moule est solidarisé au support 22 de fond de moule par un organe de liaison. Dans cette configuration, le positionnement approprié du fond 5 de moule en relation avec la hauteur de la cavité de moulage peut être obtenu par une modification de la hauteur de l'organe de liaison en changeant ce dernier (organe de liaison 23 court pour la cavité 13 de moulage de hauteur maximale comme montré à la figure 1A ; organe de liaison 23' long pour la cavité 21 de moulage de hauteur moindre comme montré à la figure 1B) et/ou par déplacement du support 22 de fond de moule et des moyens de déplacement qui lui sont associés.

Ces ajustements, quelles qu'en soient les modalités, s'avèrent longs, contraignants et finalement coûteux. Il existe donc, de la part de la pratique, une demande pressante pour que ces contraintes soient réduites, voire supprimées.

Le document US 4 815 960 décrit un dispositif de moulage muni d'un fond de moule dont la position axiale peut être réglée au moyen d'une tige filetée axiale solidaire du fond de moule par une de ses extrémités. Un écrou de réglage, supporté à libre rotation par un support fixe, est traversé par la tige filetée et permet d'effectuer le réglage en hauteur du fond de moule. Dans cet agencement connu, l'écrou de réglage est supporté par l'intermédiaire d'un palier fixe dans lequel l'écrou est engagé et tourne. L'inconvénient de cette solution réside dans le fait que toutes les contraintes s'opposant au déplacement du moule sont reprises à l'interface entre l'écrou rotatif et le palier : il en résulte une usure des pièces frottantes et un risque d'arrachement au niveau du palier.

Pour remédier à ce problème, il pourrait être envisagé de remplacer, dans la structure connue évoquée ci-dessus, l'écrou tournant par un écrou fixe, notamment solidaire du bâti, et de faire alors tourner la tige filetée dont l'extrémité porterait, par sa face frontale, contre le fond de moule. Cependant cet agencement présenterait à son tour un inconvénient qui résiderait dans l'usure du fond de moule au contact de la face frontale rotative de la tige filetée, voire dans une éventuelle déformation du fond de moule reposant sur ladite face frontale, de faible section, de la tige filetée.

L'invention a pour but de remédier aux inconvénients précités en proposant une structure perfectionnée qui permette un réglage rapide et économique de la position axiale du fond de moule en relation avec la hauteur de la cavité de moulage.

A ces fins, l'invention propose un dispositif de moulage pour la fabrication par soufflage ou étirage-soufflage de récipients, notamment de bouteilles, en matière thermoplastique telle que du PET et susceptibles de posséder des hauteurs différentes, agencé comme mentionné au préambule, lequel dispositif se caractérise, étant conformé selon l'invention, en ce que les moyens d'entretoisement de hauteur variable sont des moyens filetés à double filetage à pas inverses, solidaires du fond de moule et du support de fond de moule.

Grâce à cet agencement, le fond de moule peut être positionné axialement en relation avec la hauteur de la cavité de moulage sans modification du support de fond de moule et/ou des moyens de déplacement qui lui sont fonctionnellement associés.

Du fait du recours à un double filetage à pas inverses, toutes les contraintes auxquelles est soumis le fond de moule sont reprises au niveau de filets, donc sur une surface importante, autrement dit avec une pression réduite entre les pièces en contact et donc une usure moindre. De plus, il n'existe aucune pièce en rotation dans un palier, ce qui élimine les frictions et les usures. Il n'existe pas de contact rotatif entre une extrémité frontale de tige filetée et le fond de moule, ce qui écarte toute possibilité d'usure et éventuellement de déformation de ce dernier. Enfin, le fond de moule étant déplaçable axialement uniquement, il n'existe aucun problème d'indexation de position angulaire par rapport au moule.

Dans un premier exemple de réalisation possible, on prévoit que les moyens d'entretoisement de hauteur variable comprennent deux tiges filetées sensiblement coaxiales qui sont solidaires respectivement du fond de moule et du support de fond de moule et qui possèdent des filetages respectifs de pas inverses et une bague filetée intérieurement avec deux filetages à pas inverses et entourant les deux susdites tiges filetées.

Dans un second exemple de réalisation possible, on prévoit que les moyens d'entretoisement de hauteur variable comprennent deux bagues filetées sensiblement coaxiales qui sont solidaires respectivement du fond de moule et du support de fond de moule et qui possèdent des filetages respectifs de pas inverses et une tige filetée extérieurement avec deux filetages à pas inverses et engagée dans les deux susdites bagues filetées.

L'invention sera mieux comprise à la lecture de la description détaillée qui suit de certains modes de réalisation préférés donnés à titre d'exemples purement illustratifs. Dans cette description, on se réfère aux dessins annexés sur lesquels :
- les figures 1A et 1B sont des vues schématiques, en coupe diamétrale et en perspective latérale de dessus, d'un moule de l'état de la technique, discuté auparavant et montré respectivement dans deux configurations fonctionnelles différentes ;
- les figures 2A et 2B sont des vues schématiques partielles, en coupe diamétrale, d'une partie d'un premier exemple de réalisation d'un moule agencé conformément à l'invention, montré respectivement dans deux configurations fonctionnelles différentes ; et
- les figures 3A et 3B sont des vues schématiques partielles, en coupe diamétrale, d'une partie d'un second exemple de réalisation d'un moule agencé conformément à l'invention, montré respectivement dans deux configurations fonctionnelles différentes.

Dans la suite de la description, on conservera les mêmes références numériques qu'aux figures 1A et 1B pour désigner les organes analogues.

Conformément au but de l'invention, on prévoit de remplacer la liaison 23, 23' rigide illustrée aux figures 1A et 1B entre le fond 5 de moule et le support 22 de fond de moule par des moyens 24 d'entretoisement de hauteur variable réglables en relation avec la hauteur de la cavité de moulage. Ainsi, le fond 5 de moule peut être positionné axialement en relation avec la hauteur de la cavité de moulage sans modification de structure et/ou de position du support 22 de fond de moule et/ou des moyens de déplacement qui lui sont fonctionnellement associés.

Les moyens 24 d'entretoisement, de type purement mécanique sous forme de moyens filetés de manière que leur structure soit simple et peu coûteuse à la fabrication, au montage et à l'entretien, sont constitués conformément à l'invention par des moyens filetés à double filetage à pas inverses, solidaires du fond 5 de moule et du support 22 de fond de moule. Des exemples préférés de réalisation pratique de ces dispositions vont maintenant être exposés.

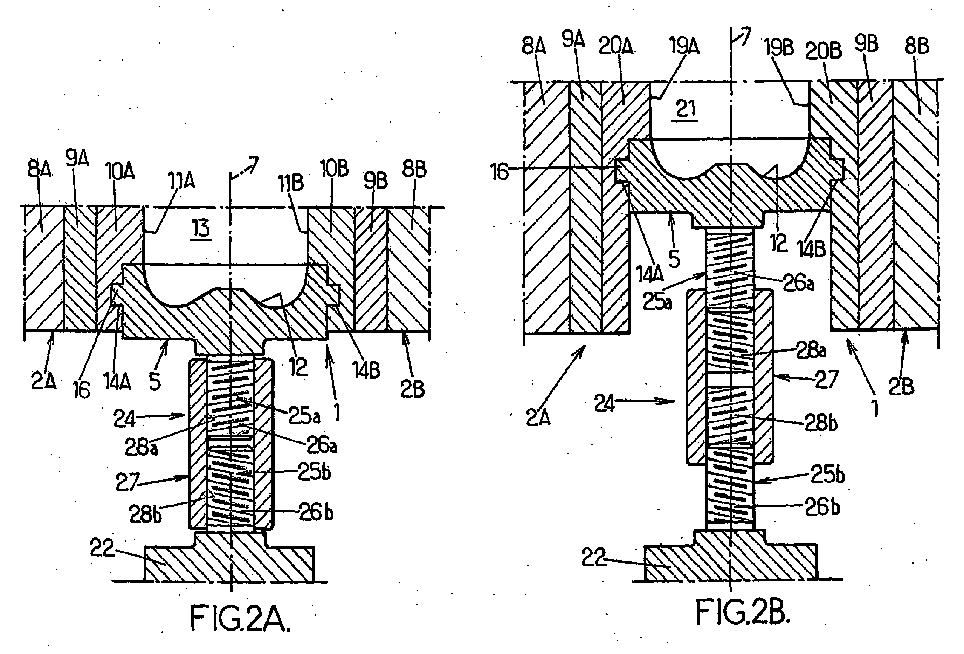

Aux figures 2A et 2B est représentée, seule, la partie, concernée par l'invention, du moule des figures 1A et 1B agencée selon un premier exemple de mise en oeuvre de ces dispositions. Dans ce premier exemple, les moyens 24 d'entretoisement de hauteur variable comprennent deux tiges 25a, 25b filetées, sensiblement coaxiales, qui sont solidaires respectivement du fond 5 de moule et du support 22 de fond de moule et qui possèdent deux filetages 26a, 26b respectifs de pas inverses en outre, une bague 27, filetée intérieurement avec deux filetages 28a, 28b à pas inverses, entoure les deux susdites tiges 25a, 25b filetées. En raison de l'existence de moyens filetés à double filetage à pas inverses, toute rotation de la bague 27 se traduit par un déplacement axial du fond 5 de moule (le support 22 de fond de moule demeurant fixe).

A la figure 2A, la rotation de la bague 27 a rapproché au maximum les deux tiges 25a, 25b, filetées de sorte que le fond 5 de moule se trouve dans sa position la plus basse correspondant à la cavité 13 de hauteur maximale, grâce à la présence de coquilles 10A, 10B pourvues d'empreintes 11A, 11B respectives adaptées coopérant avec le fond de moule.

A la figure 2B, la rotation de la bague 27 a éloigné au maximum les deux tiges 25a, 25b, filetées de sorte que le fond 5 de moule se trouve dans sa position la plus haute correspondant à une cavité 21 de hauteur minimale, grâce à la présence de coquilles 20A, 20B pourvues d'empreintes 19A, 19B respectives adaptées coopérant avec le fond de moule.

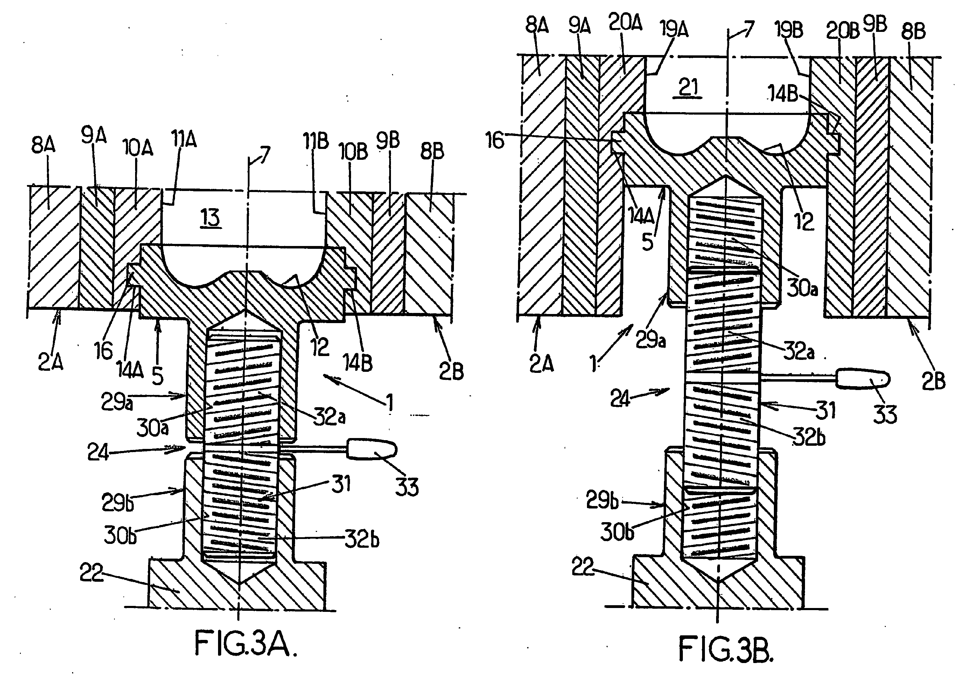

Aux figures 3A et 3B est représentée, seule, la partie, concernée par l'invention, du moule des figures 1A et 1B agencée selon un second exemple de mise en oeuvre des dispositions précitées. Dans ce second exemple, les moyens 24 d'entretoisement de hauteur variable comprennent deux bagues 29a, 29b filetées intérieurement, sensiblement coaxiales, qui sont solidaires respectivement du fond 5 de moule et du support 22 de fond de moule et qui possèdent des filetages 30a, 30b respectifs de pas inverses ; en outre, une tige 31 filetée extérieurement avec deux filetages 32a, 32b à pas inverses, est engagée dans les deux susdites bagues 29a, 29b filetées. Toute rotation de la tige 31, par exemple par l'intermédiaire d'une poignée 33 qui en est solidaire, se traduit par un déplacement axial du fond 5 de moule (le support 22 de fond de moule demeurant fixe).

A la figure 3A, la rotation de la tige 31 a rapproché au maximum les deux bagues filetées 29a, 29b, de sorte que le fond 5 de moule se trouve dans sa position la plus basse correspondant à la cavité 13 de hauteur maximale, grâce à la présence de coquilles 10A, 10B pourvues d'empreintes 11A, 11B respectives adaptées coopérant avec le fond de moule.

A la figure 3B, la rotation de la tige 31 a éloigné au maximum les deux bagues filetées 29a, 29b, de sorte que le fond 5 de moule se trouve dans sa position la plus haute correspondant à une cavité 21 de hauteur minimale, grâce à la présence de coquilles 20A, 20B pourvues d'empreintes 19A, 19B respectives adaptées coopérant avec le fond de moule.

## Revendications

1. Dispositif de moulage pour la fabrication par soufflage ou étirage-soufflage de récipients, notamment.de bouteilles, en matière thermoplastique telle que du PET et susceptibles de posséder des hauteurs différentes, ledit dispositif de moulage comprenant au moins un moule (1) qui comporte deux demi-moules (2A, 2B) mobiles l'un par rapport à l'autre et un fond (5) de moule mobile par rapport aux deux demi-moules par translation axiale (flèche 6), chaque demi-moule (2A, 2B) et le fond de moule comportant des empreintes (11A, 11B ; 19A, 19B) de moulage respectives qui, en position de fermeture du moule, définissent ensemble une cavité (13 ; 21) de moulage, le fond (5) que moule étant supporté par un support (22) de fond de moule auquel sont fonctionnellement associés des moyens de déplacement axial, le fond (5) de moule et le support (22) de fond de moule étant solidarisés l'un à l'autre par l'intermédiaire de moyens (24) d'entretoisement de hauteur variable réglables en relation avec la hauteur de la cavité de moulage et constitués sous forme de moyens filetés,
**caractérisé en ce que** les moyens d'entretoisement de hauteur variable sont des moyens filetés à double filetage à pas inverses solidaires du fond (5) de moule et du support (22) de fond de moule,
ce grâce à quoi le fond (5) de moule peut être positionné axialement en relation avec la hauteur de la cavité de moulage sans modification du support (22) de fond de moule et/ou des moyens de déplacement qui lui sont fonctionnellement associés.

2. Dispositif de moulage selon la revendication 1, **caractérisé en ce que** les moyens (24) d'entretoisement de hauteur variable comprennent deux tiges (25a, 25b) filetées sensiblement coaxiales qui sont solidaires respectivement du fond (5) de moule et du support (22) de fond de moule et qui possèdent des filetages (26a, 26b) respectifs de pas inverses et une bague (27) filetée intérieurement avec deux filetages (28a, 28b) à pas inverses et entourant les deux susdites tiges filetées.

3. Dispositif de moulage selon la revendication 1, **caractérisé en ce que** les moyens (24) d'entretoisement de hauteur variable comprennent deux bagues (29a, 29b) filetées intérieurement, sensiblement coaxiales, qui sont solidaires respectivement du fond (5) de moule et du support (22) de fond de moule et qui possèdent des filetages (30a, 30b) respectifs de pas inverses et une tige (31) filetée avec deux filetages (32a, 32b) extérieurs à pas inverses et engagée dans les deux susdites bagues filetées.

4. Dispositif de moulage selon l'une quelconque des revendications 1 à 3, **caractérisé en ce que** chaque demi-moule (2A, 2B) comprend un porte-moule (8A, 8B), un porte-coquille (9A, 9B) fixé au porte-moule et une coquille (10A, 10B ; 20A, 20B) supportée par le porte-coquille et **en ce que** les deux coquilles et le fond de moule comportent des empreintes (11A, 11B ; 19A, 19B) de moulage respectives qui, en position de fermeture du moule, définissent ensemble une cavité (13 ; 21) de moulage.

## Claims

1. A molding device for manufacturing containers, particularly bottles, made of a thermoplastic such as PET by blow molding or stretch-blow molding, and which possibly have different heights, said molding device comprising at least one mold (1) which comprises two mold halves (2A, 2B) adapted to move relative to one another and a mold base (5) adapted to move relative to the two mold halves in axial translation (arrow 6), each mold half (2A, 2B) and the mold base comprising respective molding cavity portions (11A, 11B; 19A, 19B) which, when the mold is in the closed position, together define a molding cavity (13; 21), the mold base (5) being supported by a mold base support (22) with which axial moving means are operatively associated, the mold base (5) and the mold base support (22) being secured to one another via variable-height spacer means (24) that can be adjusted in relation to the height of the molding cavity and which are made in the form of threaded means,
**characterized in that** the variable-height spacer means are threaded means having two mutually reverse screw threads secured to the mold base (5) and to the mold base support (22),
whereby the mold base (5) can be positioned axially in relation to the height of the molding cavity without changing the mold base support (22) and/or the moving means operatively associated therewith.

2. The molding device as claimed in claim 1, **characterized in that** the variable-height spacer means (24) comprise two substantially coaxial threaded rods (25a, 25b) which are secured to the mold base (5) and to the mold base support (22) respectively and which have respective mutually reverse screw threads (26a, 26b) and a ring (27) internally threaded with two mutually reverse screw threads (28a, 28b) and surrounding said two threaded rods.

3. The molding device as claimed in claim 1, **characterized in that** the variable height spacer means (24) comprise two substantially coaxial internally threaded rings (29a, 29b) which are secured to the mold base (5) and to the mold base support (22) respectively and which have respective mutually reverse screw threads (30a, 30b) and a threaded rod (31) with two external mutually reverse screw threads (32a, 32b) and which is enserted in said two threaded rings.

4. The molding device as claimed in any one of claims 1 to 3, **characterized in that** each mold half (2A, 2B) comprises a mold holder (8A, 8B), a shell holder (9A, 9B) fixed to the mold holder and a shell (10A, 10B; 20A, 20B) supported by the shell holder and **in that** the two shells and the mold base comprise respective molding cavity portions (11A, 11B; 19A, 19B) which, when the mold is in the closed position, together define a molding cavity (13; 21).

## Patentansprüche

1. Formvorrichtung zur Herstellung von Behältern, insbesondere von Flaschen, aus thermoplastischen Stoffen wie PET durch Blasen oder Streckblasen und die verschiedenen Höhen haben mögen, wobei die Formvorrichtung mindestens eine Form (1) umfasst, die zwei zueinander bewegliche Formhälften (2A, 2B) und einen zu den zwei Formhälften durch axiale Verschiebung (Pfeil 6) beweglichen Boden (5) der Form umfasst, wobei jede Formhälfte (2A, 2B) und der Boden der Form jeweils Formnester (11A, 11B; 19A, 19B) umfassen, die in der Schließposition der Form gemeinsam einen Formhohlraum (13; 21) begrenzen, wobei der Boden (5) der Form von einem Träger (22) des Bodens der Form getragen wird, mit dem axiale Verschiebungsmittel funktional verbunden sind, wobei der Boden (5) der Form und der Träger (22) des Bodens der Form durch Abstandsmittel (24) mit variabler Höhe, die in Verbindung mit der Höhe des Formhohlraums verstellbar sind und in Form von Gewindemitteln vorliegen, fest miteinander verbunden sind,
**dadurch gekennzeichnet, dass** die Abstandsmittel mit variabler Höhe Gewindemittel mit Doppelgewinde mit negativer Steigung sind, die mit dem Boden (5) der Form und dem Träger (22) des Bodens der Form fest verbunden sind,
wodurch der Boden (5) der Form ohne Änderung des Trägers (22) des Bodens der Form und/oder der Verschiebungsmittel, die funktional mit ihm verbunden sind, in Verbindung mit der Höhe des Formhohlraums axial positioniert werden kann.

2. Formvorrichtung nach Anspruch 1, **dadurch gekennzeichnet, dass** die Abstandsmittel (24) mit variabler Höhe zwei im Wesentlichen koaxiale Gewindebolzen (25a, 25b) umfassen, die mit dem Boden (5) der Form beziehungsweise dem Träger (22) des Bodens der Form fest verbunden sind und die jeweils Gewinde (26a, 26b) mit negativer Steigung und einen Innengewindering (27) mit zwei Gewinden (28a, 28b) mit negativer Steigung, der die zwei oben genannten Gewindebolzen umgibt, aufweisen.

3. Formvorrichtung nach Anspruch 1, **dadurch gekennzeichnet, dass** die Abstandsmittel (24) mit variabler Höhe zwei im Wesentlichen koaxiale Innengewinderinge (29a, 29b) umfassen, die jeweils mit dem Boden (5) der Form und dem Träger (22) des Bodens der Form fest verbunden sind und die jeweils Gewinde (30a, 30b) mit negativer Steigung und einen Gewindebolzen (31) mit zwei Außengewinden (32a, 32b) mit negativer Steigung, der in den zwei oben genannten Gewinderingen steckt, aufweisen.

4. Formvorrichtung nach einem der Ansprüche 1 bis 3, **dadurch gekennzeichnet, dass** jede Formhälfte (2A, 2B) einen Formhalter (8A, 8B), einen am Formhalter befestigten Kokillenhalter (9A, 9B) und eine vom Kokillenhalter getragene Kokille (10A, 10B; 20A, 20B) umfasst und dass die zwei Kokillen und der Boden der Form jeweils Formnester (11A, 11B; 19A, 19B) umfassen, die in der Schließposition der Form gemeinsam einen Formhohlraum (13; 21) begrenzen.
